# EUROPÄISCHE PATENTSCHRIFT

(11) **EP 2 560 852 B1**
(45) Veröffentlichungstag und Bekanntmachung des Hinweises auf die Patenterteilung: **22.04.2015**
(21) Anmeldenummer: 11709038.1
(22) Anmeldetag: 02.03.2011
(51) Int. Cl.: B60W 30/19, B60W 10/02, B60W 10/06, B60W 10/11, B60W 50/06, F16H 59/32

(54) **VERFAHREN ZUR SCHALTSTEUERUNG EINES KRAFTFAHRZEUGS**
GEARSHIFT CONTROL METHOD FOR A MOTOR VEHICLE
PROCÉDÉ DE COMMANDE DE PASSAGE DES VITESSES D'UN VÉHICULE AUTOMOBILE

(30) Priorität: 22.04.2010 DE 102010028069
(43) Veröffentlichungstag der Anmeldung: 27.02.2013
(73) Patentinhaber: ZF Friedrichshafen AG, 88038 Friedrichshafen (DE)
(72) Erfinder: SCHNEIDER, Florian, 88161 Lindenberg (DE); MAIR, Roland, 88069 Tettnang (DE)
(86) Internationale Anmeldenummer: PCT/EP2011/053109
(87) Internationale Veröffentlichungsnummer: WO 2011/131404

(56) Entgegenhaltungen:
- US-B2- 6 692 406

## Beschreibung

Die Erfindung betrifft ein Verfahren zur Schaltsteuerung eines Kraftfahrzeugs, dessen Antriebsstrang einen als turboaufgeladener Verbrennungsmotor ausgebildeten Antriebsmotor, eine als automatisierte Reibungskupplung ausgebildete Anfahr- und Schaltkupplung und ein als automatisiertes Stufenschaltgetriebe ausgebildetes Fahrgetriebe umfasst, wobei eine beim Lastaufbau am Ende einer Zughochschaltung auftretende Durchzugsschwäche des Antriebsmotors vermieden wird.

In Kraftfahrzeugen kommen immer häufiger automatisierte Stufenschaltgetriebe mit einer automatisierten Reibungskupplung als Anfahr- und Schaltkupplung zur Anwendung, bei denen die Gangwahl, die Auslösung von Schaltvorgängen, das Ein- und Auslegen der Gangstufen sowie das Ein- und Ausrücken der Reibungskupplung automatisiert, d.h. durch die Auswertung von Betriebsparametern in einem Getriebesteuergerät und die Ansteuerung zugeordneter Stellantriebe, erfolgen.

Insbesondere bei Nutzfahrzeugen sind die Antriebsmotoren zumeist als turboaufgeladene Dieselmotoren ausgebildet, die eine spezielle Lastaufbaucharakteristik aufweisen. In der nicht vorveröffentlichten DE 10 2008 054 802.2, die ein Verfahren zur Steuerung eines automatisierten Stufenschaltgetriebes in Abhängigkeit der dynamischen Betriebseigenschaften eines turboaufgeladenen Verbrennungsmotors offenbart, ist näher erläutert, dass ein turboaufgeladener Verbrennungsmotor spontan, d.h. mit hohem Drehmomentgradienten, nur ein unterhalb des Volllastmomentes liegendes Saugmoment erreichen kann. Eine weitere Erhöhung des Motormomentes ist, wenn auch mit geringerem Drehmomentgradienten, kurzfristig nur oberhalb einer Ladegrenzdrehzahl möglich, ab der der Turbolader eine deutliche Erhöhung des Ladedrucks und damit des Motormomentes bewirkt.

Das dynamische Verhalten eines turboaufgeladenen Verbrennungsmotors ist somit außer durch die Leerlaufdrehzahl, die Abregeldrehzahl und die Volllastmoment-Kennlinie auch durch die Ladegrenzdrehzahl und die Saugmoment-Kennlinie sowie die bereichsweise vorliegenden Momentengradienten bestimmt. Aufgrund der Begrenzung des spontan erreichbaren Motormomentes auf das Saugmoment ist bei turboaufgeladenen Verbrennungsmotoren unterhalb der Ladegrenzdrehzahl somit eine deutliche, allgemein als Turboloch bezeichnete Durchzugsschwäche zu verzeichnen, die z.B. beim Lastaufbau am Ende einer Zughochschaltung dann auftreten kann, wenn die Anschlussdrehzahl des Zielgangs unter der Ladegrenzdrehzahl des Antriebsmotors liegt.

Eine derartige Durchzugsschwäche des Antriebsmotors tritt bei einer Zughochschaltung insbesondere bei hohem Fahrwiderstand und hoher Motorlast auf, z.B. während einer Bergauffahrt bei großer Fahrbahnsteigung, mit hoher Zuladung oder in schwierigem Gelände (Offroad-Fahrt). Unter diesen Betriebsbedingungen kann die durch den Übersetzungssprung der Hochschaltung bestimmte Anschlussdrehzahl des Zielgangs so weit absinken, dass diese unter der Ladegrenzdrehzahl des Antriebsmotors liegt. Demzufolge kann der Antriebsmotor dann beim Lastaufbau am Ende der Hochschaltung spontan nur noch sein Saugmoment erzeugen und abgeben, welches jedoch unter dem aktuellen Fahrwiderstand (Rollwiderstand + Steigungswiderstand + Luftwiderstand) liegen kann. In diesem Fall ist somit eine Fortsetzung der Fahrt mit konstanter Fahrgeschwindigkeit oder mit einer der Fahrpedalstellung entsprechenden Fahrbeschleunigung nicht mehr möglich.

Üblicherweise ist dann eine Rückschaltung oder sogar eine Anfahrt aus dem Stillstand erforderlich, um ein Drücken der Drehzahl des Antriebsmotors unter die Leerlaufdrehzahl und ein nachfolgendes Abwürgen des Antriebsmotors zu verhindern. Dies stört den gewünschten Fahrtablauf jedoch erheblich und wird seitens des Fahrers zumeist als sehr unkomfortabel angesehen.

Üblicherweise ist die Schaltstrategie eines automatisierten Stufenschaltgetriebes, d.h. die Schaltkennlinien und Schaltkennfelder der Getriebesteuerung, jedoch derart ausgelegt, dass eine Zughochschaltung unter derartigen Betriebsbedingungen bei automatisierter Schaltauslösung nicht erfolgt und bei manueller Schaltauslösung nicht zugelassen wird. Dennoch ist es möglich, dass sich bei einer Zughochschaltung eine derartige Betriebssituation mit einer Durchzugsschwäche des Antriebsmotors störungsbedingt trotzdem einstellt.

So kann die zugkraftfreie Phase der Schaltung aufgrund getriebeinterner Probleme stark verlängert sein, z.B. weil bei Verwendung synchronisierter Gangkupplungen die Synchronisierung des Zielgangs aufgrund einer starken Abnutzung der zugeordneten Reibsynchronisierung oder bei Verwendung unsynchronisierter Gangkupplungen das Einlegen des Zielgangs aufgrund einer Zahn-auf-Zahn-Stellung der Kupplungshälften verzögert wird. Ebenso kann der Fahrwiderstand während der zugkraftfreien Phase der Hochschaltung, z.B. aufgrund eines Übergangs in einen Streckenabschnitt mit deutlich höherer Fahrbahnsteigung, deutlich ansteigen. Demzufolge sinkt die Fahrgeschwindigkeit des Kraftfahrzeugs während der schaltungsbedingten Zugkraftunterbrechung stärker ab, als dies in den Schaltkennlinien und Schaltkennfeldern der Getriebesteuerung berücksichtigt ist.

Es ist jedoch auch möglich, dass ein derartiger Betriebszustand bei bestimmten Einsatzfahrzeugen oder bei bestimmten Einsatzfahrten absichtlich herbeigeführt wird, indem eine an sich unübliche Zughochschaltung ausgehend von einer hohen Motordrehzahl mit einem ungewöhnlich großen Gangsprung, d.h. mit einem erhöhten Übersetzungssprung, vorgenommen wird. Damit soll eine Beschleunigung auf eine vorgesehene Zielgeschwindigkeit in dem betreffenden Zielgang, d.h. ohne weitere Hochschaltungen und die damit verbundenen Zugkraftunterbrechungen, durchgeführt werden. Dies betrifft z.B. Flugfeldlöschfahrzeuge, die ihren jeweiligen Einsatzort so schnell wie möglich, also mit der größtmöglichen Fahrbeschleunigung, erreichen sollen. Bei der Verwendung eines turboaufgeladenen Verbrennungsmotors ist der hierzu verwendbare größtmögliche Gangsprung jedoch durch die Lastaufbaucharakteristik des Antriebsmotors begrenzt, da das Erreichen des Einsatzortes bei Auftreten einer vorübergehenden Durchzugsschwäche des Antriebsmotors stark verzögert würde.

Zur Vermeidung oder zumindest Abschwächung des unerwünschten Turbolochs sind vielfältige Vorrichtungen und Verfahren zu deren Verwendung bekannt geworden. So beispielsweise eine verstellbare Turbinengeometrie zur Verbesserung des Ansprechverhaltens des Abgasturboladers, ein Boost-Antrieb zur Unterstützung des Verbrennungsmotors bei hoher Motorlast, oder Zusatzeinrichtungen zur Erhöhung des Ladedruckes bei niedriger Motordrehzahl, wie ein mechanisch antreibbarer Kompressor, ein elektrisch antreibbarer Zusatzverdichter, ein mechanischer oder elektrischer Antrieb der Triebwelle des Abgasturboladers oder eine Druckluftversorgungseinrichtung zur Erzeugung und Einspeisung von Druckluft in den Ansaug- oder Abgastrakt des Verbrennungsmotors.

So ist in der US 6 692 406 B2 ein Verfahren nach dem Oberbegriff des Anspruchs 1 zur Schaltsteuerung eines mit einem turboaufgeladenen Verbrennungsmotor, einer automatisierten Reibungskupplung und einem automatisierten Schaltgetriebe versehenen Kraftfahrzeugs beschrieben, gemäß dem bei einer Volllast-Hochschaltung der Verbrennungsmotor derart angesteuert wird, dass der Ladedruck während des Schaltvorgangs entweder durch eine Erhöhung der Abgasenergie oder durch eine Beibehaltung der Drehzahl des Abgasturboladers aufrecht erhalten wird, wodurch beim Lastaufbau am Ende der Hochschaltung ein ausreichend hohes Motormoment aufgebaut werden kann. Hierzu ist unter anderem eine geeignete Verstellung der Leitschaufeln eines Turboladers mit variabler Turbinengeometrie (VTG) vorgesehen.

Aus der DE 103 35 259 A1 ist ein Verfahren zum Betreiben eines Antriebsstrangs bekannt, bei dem insbesondere ein turboaufgeladener Verbrennungsmotor bei Anfahr- und Schaltvorgängen zur Kompensation seiner Durchzugsschwäche durch einen elektrischen Boostantrieb angetrieben wird, wodurch die Motordrehzahl des Verbrennungsmotor jeweils schneller angehoben und die Schlupfphase der Reibungskupplung verkürzt werden.

Schließlich ist in der DE 10 2006 027 865 A1 ein Verfahren zur Ladedruckregelung eines turboaufgeladenen Verbrennungsmotors offenbart, gemäß dem bei einer Zughochschaltung während des Lastaufbaus Druckluft aus einer Druckluftversorgungseinrichtung vor der Turbine des Abgasturboladers in den Abgastrakt des Verbrennungsmotors eingeleitet wird, wodurch der Verdichter des Abgasturboladers von der Turbine stärker beschleunigt und somit ein erhöhter Ladedruck erzeugt wird.

Derartige Zusatzeinrichtungen sind jedoch relativ aufwendig und teuer, erhöhen den Bauraumbedarf und stellen ein erhöhtes Störungspotential für den Betrieb des Verbrennungsmotors dar, so dass häufig darauf verzichtet wird.

Der Erfindung liegt daher die Aufgabe zugrunde, ein Verfahren zur Schaltsteuerung eines Kraftfahrzeugs der eingangs genannten Art vorzuschlagen, mit dem eine beim Lastaufbau am Ende einer Zughochschaltung auftretende Durchzugsschwäche des Antriebsmotors vermieden werden kann, ohne dazu auf eine zusätzliche Vorrichtung zur Unterstützung des Antriebsmotors oder zur Erhöhung des Ladedruckes zurückzugreifen.

Diese Aufgabe ist in Verbindung mit den Merkmalen des Oberbegriffs des Anspruchs 1 dadurch gelöst, dass der Antriebsmotor frühestens nach dem Auslegen des Lastgangs und spätestens zu Beginn des Lastaufbaus nach dem Einlegen des Zielgangs bis an die Ladegrenzdrehzahl n_{L_min} oder eine geringfügig über der Ladegrenzdrehzahl n_{L_min} liegende Motordrehzahl n_{M} beschleunigt (n_{M} = n_{L_min}; n_{M} = n_{L_min} + Δn_{M}) und während des Lastaufbaus bei weitgehend konstanter Motordrehzahl (n_{M} ≈ n_{L_min}) über das Saugmoment M_{S} des Antriebsmotors hinaus bis nahe an das Volllastmoment M_{VL}(n_{L_min}) belastet wird, bevor der Schlupfbetrieb der Reibungskupplung beendet wird.

Vorteilhafte Ausgestaltungen und Weiterbildungen dieses Verfahrens sind Gegenstand der Unteransprüche.

Die Erfindung geht demnach aus von einem an sich bekannten Kraftfahrzeug, beispielsweise einem Nutzfahrzeug, dessen Antriebsstrang einen als turboaufgeladener Verbrennungsmotor ausgebildeten Antriebsmotor, ein als automatisierte Reibungskupplung ausgebildetes Anfahrelement und ein als automatisiertes Stufenschaltgetriebe ausgebildetes Fahrgetriebe umfasst. Bei einem derartigen Kraftfahrzeug kann beim Lastaufbau am Ende einer Zughochschaltung eine Durchzugsschwäche des Antriebsmotors auftreten, die sich darin äußert, dass das durch den Antriebsmotor spontan erzeugbare Maximalmoment Mₘₐₓ nicht ausreicht, um die Fahrt in dem eingelegten Zielgang mit einer der durch die Fahrpedalstellung vorgegebenen Leistungsanforderung des Fahrers entsprechenden Fahrbeschleunigung oder zumindest mit konstanter Fahrgeschwindigkeit fortzusetzen.

Um eine derartige Drehmomentschwäche des Antriebsmotors ohne eine Rückschaltung oder eine Anfahrt aus dem Stillstand zu vermeiden, sieht das Verfahren gemäß der Erfindung vor, dass der Antriebsmotor während der schaltungsbedingten Zugkraftunterbrechung, d.h. frühestens nach dem Auslegen des Lastgangs und spätestens zu Beginn des Lastaufbaus nach dem Einlegen des Zielgangs, zunächst bis an die Ladegrenzdrehzahl n_{L_min} oder eine geringfügig über der Ladegrenzdrehzahl n_{L_min} liegende Motordrehzahl n_{M} beschleunigt (n_{M} = n_{L_min}; n_{M} = n_{L_min} + Δn_{M}) wird, ab welcher der Abgasturbolader einen höheren Ladedruck und der Antriebsmotor somit ein höheres, über dem Saugmoment M_{S} liegendes Motormoment M_{M} aufbauen kann. Der nachfolgende Lastaufbau erfolgt dann durch ein koordiniertes Schließen der Reibungskupplung und eine Erhöhung der Motorleistung des Antriebsmotors bei weitgehend konstanter Motordrehzahl (n_{M} ≈ n_{L_min}) über das Saugmoment M_{S} des Antriebsmotors hinaus bis nahe an das Volllastmoment M_{VL}(n_{L_min}), bevor der Schlupfbetrieb der Reibungskupplung beendet wird.

Eine hierbei optional vorgesehene Drehzahlerhöhung Δn_{M} von etwa 50 min⁻¹ bis 100 min⁻¹ über die Ladegrenzdrehzahl n_{L_min} hinaus dient als Steuerungsreserve zum Ausgleich von Signalungenauigkeiten und Störungen, durch die ein Absinken der Motordrehzahl n_{M} unter die Ladegrenzdrehzahl n_{L_min} und ein dadurch verursachter Rückfall des Motormomentes M_{M} auf das Saugmoment M_{S} vermieden werden können.

Somit wird in Abhängigkeit von den dynamischen Betriebseigenschaften des Antriebsmotors ein erhöhtes Motormoment (M_{M} = M_{VL}(n_{L-min})) zur Verfügung gestellt, mit dem die Drehmomentschwäche des Antriebsmotors vermieden wird, und das zumeist ausreicht, um die Fahrt ohne eine Rückschaltung oder eine Anfahrt aus dem Stillstand fortzusetzen.

Da der erfindungsgemäße Verfahrensablauf jedoch eine gegenüber einem normalen Hochschaltungsablauf verlängerte Schlupfphase der Reibungskupplung aufweist, ist die Reibungskupplung dabei einer erhöhten mechanischen und thermischen Belastung ausgesetzt. Demzufolge sollte das erfindungsgemäße Verfahren zur Schaltsteuerung nur unter bestimmten Betriebsbedingungen, d.h. als Sonderverfahren ausgeführt werden.

Die die dynamischen Betriebseigenschaften des Verbrennungsmotors repräsentierenden Daten können entweder unmittelbar dem Motorsteuergerät oder einem Datenspeicher des Getriebesteuergerätes entnommen werden. Wie schon in der DE 10 2008 054 802.2 beschrieben ist, können die betreffenden Daten am Ende der Fertigungsstrecke des Kraftfahrzeugs entsprechend der Fahrzeugkonfiguration auf den Datenspeicher des Getriebesteuergerätes übertragen und während des späteren Fahrbetriebs durch den Abgleich mit aktuellen Betriebsdaten beispielsweise des Antriebsmotors adaptiert werden, d.h. an geänderte Betriebseigenschaften angepasst werden. Durch den Zugriff auf die derart aktualisierten Daten passt sich auch das vorliegende Verfahren zur Fahrsteuerung selbsttätig an geänderte Betriebseigenschaften des Kraftfahrzeugs bzw. des Antriebsmotors an.

Hinsichtlich der Beendigung des Schlupfbetriebs der Reibungskupplung sind im Wesentlichen drei Varianten möglich, die sich im Fahrkomfort, in der mechanischen und thermischen Belastung der Reibungskupplung sowie in dem letztlich erzielbaren Motordrehmoment M_{M} voneinander unterscheiden.

In einer ersten Verfahrensvariante ist vorgesehen, dass der Antriebsmotor auf der aktuellen Motordrehzahl, also der Ladegrenzdrehzahl oder einer etwas über der Ladegrenzdrehzahl liegenden Drehzahl (n_{M} = n_{L_min}; n_{M} = n_{L_min} + Δn_{M}) und dem aktuellen Motormoment (M_{M} ≈ M_{VL}(n_{L_min})), sowie die Reibungskupplung auf dem aktuellen Öffnungsgrad gehalten werden, bis sich an der Reibungskupplung Synchronlauf eingestellt hat (n_{M} = n_{GE}), und dass die Reibungskupplung dann vollständig geschlossen wird. Diese Verfahrensvariante weist die Vorteile einer einfachen Steuerbarkeit und eines weitgehend ruckfreien und damit komfortablen Drehmomentverlaufs auf. Jedoch ist die Schlupfphase der Reibungskupplung vergleichsweise lang und somit die Belastung der Reibungskupplung relativ hoch.

Diese Verfahrensvariante, bei welcher der Antriebsmotor bis zum vollständigen Schließen der Reibungskupplung auf der aktuellen Motordrehzahl (n_{M} = n_{L_min}; n_{M} = n_{L_min} + Δn_{M}) und dem aktuellen Motormoment (M_{M} ≈ M_{VL}(n_{L_min})) gehalten wird, kommt bevorzugt dann zur Anwendung, wenn das aktuelle Motormoment M_{VL}(n_{L_min}) weitgehend dem aktuellen Sollmoment Mₛₒₗₗ des Antriebsmotors entspricht (M_{VL}(n_{L_min}) ≈ Mₛₒₗₗ).

Das Sollmoment Mₛₒₗₗ des Antriebsmotors wird von dem Fahrer über die Fahrpedalstellung vorgegeben und entspricht zumindest dem Fahrwiderstandsmoment M_{FW}, welches sich aus der Summe der Fahrwiderstände des Kraftfahrzeugs, wie Rollwiderstand, Steigungswiderstand und Luftwiderstand, durch Rückrechnung mit der Gesamtübersetzung und dem Wirkungsgrad des Antriebsstrangs auf die Eingangswelle des Stufenschaltgetriebes ergibt. Will der Fahrer die aktuelle Fahrgeschwindigkeit beibehalten, entspricht das Sollmoment Mₛₒₗₗ somit exakt dem Fahrwiderstandsmoment M_{FW} (Mₛₒₗₗ = M_{FW}). Will der Fahrer dagegen beschleunigen, liegt das Sollmoment Mₛₒₗₗ um ein entsprechendes Beschleunigungsmoment M_{Acc} über dem Fahrwiderstandsmoment M_{FW} (Mₛₒₗₗ = M_{FW} + M_{Acc}).

Gemäß einer zweiten Verfahrensvariante ist dagegen vorgesehen, dass die Motordrehzahl n_{M} durch ein weiteres Schließen der Reibungskupplung und/oder durch einen Eingriff in die Motorsteuerung auf die Getriebeeingangsdrehzahl n_{GE} abgesenkt wird (n_{M} = n_{GE}, n_{M} < n_{L_min}), und dass die Reibungskupplung dann vollständig geschlossen wird. Diese Verfahrensvariante weist den Vorteil einer verkürzten Schlupfphase und damit eine Verringerung der Belastung der Reibungskupplung auf. Allerdings ist der Übergang der Reibungskupplung von dem Schlupfbetrieb in den Haftbetrieb als unkomfortabler Ruck wahrnehmbar.

Die hierbei vorgesehene Absenkung der Motordrehzahl n_{M} unter die Ladegrenzdrehzahl n_{L_min} sollte erst dann erfolgen, wenn der Ladedruck p_{L} des Antriebsmotors einen für einen Ladedruckaufbau durch den Abgasturbolader kennzeichnenden Ladedruckgrenzwert p_{L_min} überschritten hat (p_{L} > p_{L_min}), und wenn das erhöhte Motormoment (M_{M} = M_{VL}(n_{L_min}) stabil zur Verfügung steht, da sonst ein unerwünschter Rückfall des Motormomentes M_{M} auf das Saugmoment M_{S} erfolgen kann.

Generell sollte die zuletzt erläuterte Verfahrensvariante mit der Absenkung der Motordrehzahl n_{M} unter die Ladegrenzdrehzahl n_{L_min} nur dann zur Anwendung kommen, wenn das aktuelle Motormoment M_{VL}(n_{L_min}) deutlich über dem Sollmoment Mₛₒₗₗ des Antriebsmotors liegt (M_{VL}(n_{L_min}) >> Mₛₒₗₗ), und wenn das Motormoment M_{VL}(n_{M}) bei der abgesenkten Motordrehzahl (n_{M} < n_{L_min}) zumindest das Fahrwiderstandsmoment M_{FW} nicht unterschreitet (M_{VL}(n_{M}) ≥ M_{FW}).

In einer dritten Verfahrensvariante ist vorgesehen, dass der Antriebsmotor durch eine Erhöhung der Motorleistung und ein weiteres Schließen der Reibungskupplung auf eine höhere Motordrehzahl (n_{M} > n_{L_min}) sowie ein höheres Motormoment (M_{M} > M_{VL}(n_{L_min})) eingestellt und dort gehalten wird, bis sich an der Reibungskupplung Synchronlauf eingestellt hat (n_{M} = n_{GE}), und dass die Reibungskupplung dann vollständig geschlossen wird. Diese Verfahrensvariante weist neben dem Vorteil eines weitgehend ruckfreien und damit komfortablen Drehmomentverlaufs eine deutlich verlängerte Schlupfphase und damit eine erhöhte Belastung der Reibungskupplung auf.

Daher kommt diese Verfahrensvariante, bei der die Motordrehzahl n_{M} über die Ladegrenzdrehzahl n_{L_min} hinaus erhöht wird, bevorzugt nur dann zur Anwendung, wenn das aktuelle Motormoment M_{VL}(n_{L_min}) deutlich unter dem Sollmoment Mₛₒₗₗ des Antriebsmotors liegt (M_{VL}(n_{L_min}) << Mₛₒₗₗ), und wenn das Motormoment M_{VL}(n_{M}) bei der erhöhten Motordrehzahl (n_{M} < n_{L_min}) zumindest das Fahrwiderstandsmoment M_{FW} nicht unterschreitet (M_{VL}(n_{M}) ≥ M_{FW}).

Zur Erkennung einer vorliegenden oder unmittelbar bevorstehenden Durchzugsschwäche des Antriebsmotors und somit zur Auslösung des erfindungsgemäßen Verfahrens können verschiedene Kriterien allein oder in Kombination miteinander geprüft werden.

So kann eine vorliegende oder unmittelbar bevorstehende Durchzugsschwäche des Antriebsmotors dadurch erkannt werden, dass die Motordrehzahl n_{M} während der schaltungsbedingten Zugkraftunterbrechung unter die Ladegrenzdrehzahl n_{L_min} des Antriebsmotors gesunken ist (n_{M} < n_{L_min}), und dass das Fahrwiderstandsmoment M_{FW} nach Abschluss der Hochschaltung über dem Saugmoment M_{S} des Antriebsmotors liegt (M_{FW} > M_{S}). Der Antriebsmotor ist dann nämlich nicht mehr in der Lage, spontan ein über dem Saugmoment M_{S} liegendes Motormoment M_{M} zu erzeugen, das erforderlich wäre, um die Fahrt zumindest mit konstanter Fahrgeschwindigkeit fortzusetzen.

Ebenso kann eine vorliegende oder unmittelbar bevorstehende Durchzugsschwäche des Antriebsmotors dadurch erkannt werden, dass die Anschlussdrehzahl n_{Ziel} der aktuellen Hochschaltung unter der Ladegrenzdrehzahl n_{L_min} des Antriebsmotors liegt (n_{Ziel} < n_{L_min}), und dass das Fahrwiderstandsmoment M_{FW} nach Abschluss der Hochschaltung über dem Saugmoment M_{S} des Antriebsmotors liegt (Mₛₒₗₗ > Ms). Wenn die Anschlussdrehzahl n_{Ziel} der Hochschaltung unter der Ladegrenzdrehzahl n_{L_min} liegt, wird der Antriebsmotor mit hoher Wahrscheinlichkeit durch das Schließen der Reibungskupplung unter die Ladegrenzdrehzahl n_{L_min} gedrückt, selbst wenn die Motordrehzahl n_{M} vor dem Lastaufbau darüber liegt.

Auch kann eine vorliegende oder unmittelbar bevorstehende Durchzugsschwäche des Antriebsmotors dadurch erkannt werden, dass der Ladedruck p_{L} des Antriebsmotors während der schaltungsbedingten Zugkraftunterbrechung unter den Ladedruckgrenzwert p_{L_min} gesunken ist (p_{L} < _{PL_min}), und dass das Fahrwiderstandsmoment M_{FW} nach Abschluss der Hochschaltung über dem Saugmoment M_{S} des Antriebsmotors liegt (M_{FW} > M_{S}).

Zudem ist es sinnvoll, die Durchführung des Verfahrens von bestimmten betriebsspezifischen, fahrzeugspezifischen, umgebungsspezifischen und/oder einsatzspezifischen Kriterien abhängig zu machen.

So ist es zweckmäßig, permanent das aktuelle Sollmoment Mₛₒₗₗ des Antriebsmotors zu ermitteln, und dann vorzeitig zur normalen Schalt- oder Fahrsteuerung überzugehen, d.h. das erfindungsgemäße Steuerungsverfahren abzubrechen, wenn das aktuelle Sollmoment Mₛₒₗₗ das Saugmoment Ms des Antriebsmotors erreicht oder unterschritten hat (Mₛₒₗₗ ≤ Ms). Eine Absenkung des Sollmomentes Mₛₒₗₗ kann z.B. dadurch erfolgen, dass der Fahrer während des Verfahrensablaufs, d.h. während der Zughochschaltung, die Fahrpedalstellung reduziert, weil er das Kraftfahrzeug verzögern will, oder weil der Fahrwiderstand durch einen Übergang in einen Streckenabschnitt mit niedrigerer Fahrbahnsteigung absinkt, der Fahrer das Kraftfahrzeug aber nicht beschleunigen will.

Insbesondere bei der ersten und der dritten Verfahrensvariante ist die mechanische und thermische Belastung der Reibungskupplung aufgrund der langen Schlupfphasen relativ hoch und kann daher zulässige Belastungsgrenzen überschreiten. Es ist daher sinnvoll, permanent die thermische und/oder mechanische Belastung der Reibungskupplung zu ermitteln, und dann vorzeitig zur normalen Schalt- oder Fahrsteuerung überzugehen, d.h. das erfindungsgemäße Steuerungsverfahren abzubrechen, wenn die aktuelle Belastung der Reibungskupplung einen vorgegebenen Belastungsgrenzwert erreicht oder überschritten hat. Der thermische Belastungszustand der Reibungskupplung kann z.B. in Form einer sensorisch erfassten Kupplungstemperatur ermittelt werden, die zur Entscheidung mit einem vorgegebenen Temperaturgrenzwert verglichen wird. Bevorzugt wird jedoch eine Berechnung der im Schlupfbetrieb in die Reibungskupplung eingetragenen Wärmeenergie, dessen Betrag zur Entscheidung mit einem vorgegebenen Wärmenergie-Grenzwert verglichen wird.

Zur Vermeidung einer Überlastung und Schädigung der Reibungskupplung ist es jedoch noch besser, wenn die durch die erfindungsgemäße Schaltsteuerung bewirkte thermische und/oder mechanische Belastung der Reibungskupplung vorab ermittelt wird, also vor dem Starten des Steuerungsverfahrens, und das erfindungsgemäße Verfahren nur dann durchgeführt wird, wenn die Belastung der Reibungskupplung einen vorgegebenen Belastungsgrenzwert voraussichtlich nicht erreicht oder überschreitet. Anhand der vorgesehenen Drehzahl- und Drehmomentverläufe des Antriebsmotors sowie des Drehzahlverlaufs der Eingangswelle des Stufenschaltgetriebes während der Hochschaltung können die jeweilige Schlupfdrehzahl sowie die Reibleistung und somit die thermische und mechanische Gesamtbelastung der Reibungskupplung relativ genau vorhergesagt werden.

Ebenso ist es sinnvoll, das durch die erfindungsgemäße Schaltsteuerung erreichbare Maximalmoment Mₘₐₓ des Antriebsmotors vorab zu ermitteln, und das Verfahren gemäß der Erfindung nur dann durchzuführen, wenn das erreichbare Maximalmoment Mₘₐₓ zumindest das aktuelle Fahrwiderstandsmoment M_{FW} nicht unterschreitet (Mₘₐₓ ≥ M_{FW}). Ist diese Bedingung nämlich nicht erfüllt, macht die Durchführung des Steuerungsverfahrens keinen Sinn, da dann eine Verzögerung des Kraftfahrzeugs eintreten würde, und demzufolge eine Rückschaltung oder eine Anfahrt aus dem Stillstand ohnehin unausweichlich ist.

Ein weiteres Kriterium zur Aktivierung des erfindungsgemäßen Verfahrens kann darin bestehen, dass die erfindungsgemäße Fahrsteuerung nur dann durchgeführt wird, wenn die Fahrpedalstellung eine vorab festgelegte Grenzstellung erreicht oder überschritten hat. Bei dieser Grenzstellung des Fahrpedals kann es sich z.B. um die Kickdown-Stellung handeln, mit der üblicherweise eine Rückschaltung ausgelöst wird. Mit diesem Kriterium ist sichergestellt, dass die erfindungsgemäße Fahrsteuerung nur bei hoher Leistungsanforderung des Fahrers aktiviert wird.

Außerdem kann vorgesehen sein, dass die erfindungsgemäße Fahrsteuerung nur dann durchgeführt wird, wenn diese als fahrzeugspezifische oder einsatzspezifische Sonderfunktion freigegeben bzw. freigeschaltet ist. So ist es z.B. möglich, dass die erfindungsgemäße Fahrsteuerung nur bei bestimmten Einsatzfahrzeugen, wie Feuerwehr-, Rettungs- und Militärfahrzeugen, verfügbar bzw. freigeschaltet ist, oder nur für spezielle Einsätze, wie z.B. Offroad-Fahrten, freigeschaltet werden kann, in Standardfahrzeugen bzw. im normalen Fahrbetrieb jedoch nicht verfügbar bzw. gesperrt ist.

Zur Verdeutlichung der Erfindung ist der Beschreibung eine Zeichnung mit einem Ausführungsbeispiel beigefügt. In dieser zeigt
- Fig. 1: ein Motorkennfeld mit Drehmomentverläufen zur Vermeidung einer bei einer Zughochschaltung auftretenden Durchzugsschwäche eines turboaufgeladenen Verbrennungsmotors,
- Fig. 2: relevante Drehzahl- und Drehmomentverläufe bei einer Hochschaltung unter Anwendung der erfindungsgemäßen Schaltsteuerung,
- Fig. 3: relevante Drehzahl- und Drehmomentverläufe bei einer Hochschaltung ohne Anwendung der erfindungsgemäßen Schaltsteuerung,
- Fig. 4: ein Motordynamik-Kennfeld eines turboaufgeladenen Verbrennungsmotors,
- Fig. 5a: den Drehmomentaufbau eines Verbrennungsmotors nach Fig. 4 bei einer unterhalb der Ladegrenzdrehzahl geführten Motordrehzahl, und
- Fig. 5b: den Drehmomentaufbau eines Verbrennungsmotors nach Fig. 4 bei einer über die Ladegrenzdrehzahl geführten Motordrehzahl.

Ein vorliegend vorausgesetzter Antriebsstrang eines Nutzfahrzeugs umfasst einen als turboaufgeladener Verbrennungsmotor ausgebildeten Antriebsmotor, eine als automatisierte Reibungskupplung ausgebildete Anfahr- und Schaltkupplung und ein als automatisiertes Stufenschaltgetriebe ausgebildetes Fahrgetriebe. Das Stufenschaltgetriebe ist eingangsseitig über die Reibungskupplung mit der Triebwelle (Kurbelwelle) des Verbrennungsmotors verbindbar und steht ausgangsseitig über eine Kardanwelle mit dem Achsgetriebe (Achsdifferenzial) einer Antriebsachse in Verbindung.

An dem Verbrennungsmotor ist mindestens ein Nebenaggregat und gegebenenfalls mindestens ein antriebsseitiger Nebenabtrieb angeordnet, die im angetriebenen Zustand das von dem Verbrennungsmotor an die Reibungskupplung abgebbare und für den Antrieb des Kraftfahrzeugs verfügbare Motormoment M_{M} reduzieren. Außerdem können weitere abtriebsseitige Nebenabtriebe an dem Stufenschaltgetriebe oder an dem Achsgetriebe angeordnet sein, die im aktivierten Zustand das über die Reibungskupplung in das Stufenschaltgetriebe eingeleitete Motormoment M_{M} weiter reduzieren, so dass im Fahrbetrieb ein entsprechend reduziertes Drehmoment für die Überwindung des Fahrwiderstands und die Erzielung einer zumindest minimalen Fahrbeschleunigung zur Verfügung steht.

Der Verbrennungsmotor muss im Fahrbetrieb somit ein Motormoment M_{M} erzeugen und an der Reibungskupplung abgeben können, das abzüglich der Antriebsmomente für die Nebenaggregate und die abtriebsseitigen Nebenabtriebe ausreicht, um eine akzeptablen Fahrbeschleunigung erzielen zu können. Hierzu muss das von der Reibungskupplung übertragene Motormoment M_{M} so hoch sein, dass es abzüglich der Antriebsmomente für die abtriebsseitigen Nebenabtriebe das aus dem aktuellen Fahrwiderstand resultierende, d.h. mit der Gesamtübersetzung und dem Wirkungsgrad des Antriebsstrangs auf die Eingangswelle des Stufenschaltgetriebes reduzierte Fahrwiderstandsmoment M_{FW} so weit übertrifft, dass das überschüssige Drehmoment zumindest für eine minimale Fahrbeschleunigung ausreicht.

Mit der vorliegenden Erfindung wird ein Verfahren vorgeschlagen, mit dem eine beim Lastaufbau am Ende einer Zughochschaltung auftretende Durchzugsschwäche des Antriebsmotors vermieden wird, ohne dazu auf eine zusätzliche Vorrichtung zur Unterstützung des Antriebsmotors oder zur Erhöhung des Ladedruckes zurückzugreifen.

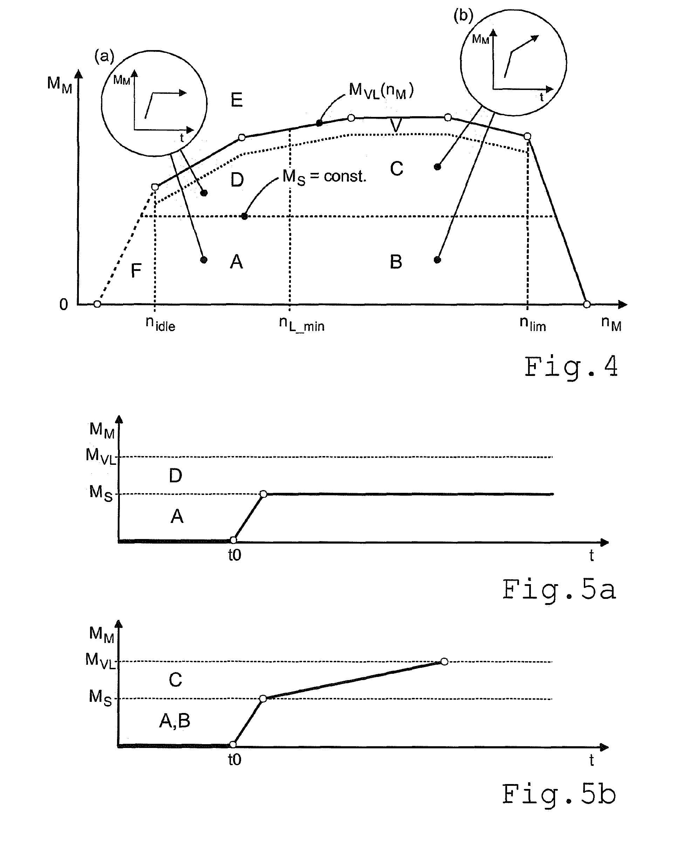

Hierzu sind die dynamischen Betriebseigenschaften des als turboaufgeladener Verbrennungsmotor ausgebildeten Antriebsmotors von Bedeutung, die einem aus der DE 10 2008 054 802.2 bekannten Motordynamik-Kennfeld entnehmbar sind, das in einem Datenspeicher des Getriebesteuergerätes abgelegt sein kann und beispielhaft in Fig. 4 abgebildet ist.

Das in Fig. 4 in einem Drehmoment-Drehzahl-Diagramm dargestellte Motordynamik-Kennfeld enthält das spontan abrufbare Maximalmoment Mₘₐₓ des Verbrennungsmotors und den maximalen Momentengradienten (*d*M_{M}/*d*t)ₘₐₓ, mit dem das spontan abrufbare Maximalmoment Mₘₐₓ des Verbrennungsmotors schnellstmöglich erreichbar ist, jeweils als Funktion des aktuellen Motormomentes M_{M} und der aktuellen Motordrehzahl n_{M} (Mₘₐₓ = f(M_{M}, n_{M}), *(d* M_{M} / *d*t)ₘₐₓ = f(M_{M}, n_{M})). Das Motordynamik-Kennfeld ist begrenzt durch die stationäre Volllast-Drehmomentkennlinie M_{VL}(n_{M}), die Nullmomentlinie (M_{M} = 0), die Leerlaufdrehzahl n_{idle} und die Abregeldrehzahl nₗᵢₘ des Verbrennungsmotors. Durch die Saugmomentkennlinie M_{S}(n_{M}) des hier vereinfacht als konstant angenommenen Saugmomentes M_{S} = const. und die Ladegrenzdrehzahl n_{L_min} des Verbrennungsmotors ist das Motordynamik-Kennfeld zudem in vier Betriebsbereiche A, B, C, D unterteilt.

In dem unterhalb der Saugmomentkennlinie M_{S} = const. und unterhalb der Ladegrenzdrehzahl n_{L_min} liegenden ersten Betriebsbereich A (0 ≤ M_{M} < Ms, n_{idle} ≤ n_{M} < n_{L_min}) wird das spontan abrufbare Maximalmoment Mₘₐₓ(n_{M}) des Verbrennungsmotors jeweils durch den entsprechenden Wert des Saugmomentes Ms gebildet (Mₘₐₓ(n_{M}) = Ms). Da das Saugmoment Ms in diesem Bereich konstant ist (M_{S} = const.), wird das spontan abrufbare Maximalmoment Mₘₐₓ des Verbrennungsmotors durch einen einzigen Wert repräsentiert (Mₘₐₓ = M_{S} = const.). Unabhängig davon kann auch der in diesem Bereich sehr hohe maximale Momentengradient (*d*M_{M}/*d*t)ₘₐₓ im Betriebsbereich A durch einen einzigen Wert wiedergegeben werden.

In dem unterhalb der Saugmomentkennlinie M_{S} = const. und oberhalb der Ladegrenzdrehzahl n_{L_min} liegenden zweiten Betriebsbereich B (0 ≤ M_{M} < Ms, n_{L_min} ≤ n_{M} ≤ nₗᵢₘ) wird das spontan abrufbare Maximalmoment Mₘₐₓ(n_{M}) des Verbrennungsmotors jeweils ebenfalls durch den entsprechenden Wert des Saugmomentes M_{S} gebildet. Da das Saugmoment M_{S} auch in diesem Betriebsbereich einen konstanten Verlauf aufweist (M_{S} = const.), wird das spontan abrufbare Maximalmoment Mₘₐₓ des Verbrennungsmotors in Betriebsbereich B ebenfalls durch einen einzigen Wert repräsentiert (Mₘₐₓ = Ms = const.). Wie schon in Betriebsbereich A kann auch in Betriebsbereich B der unterhalb der Saugmomentkennlinie M_{S} = const. sehr hohe maximale Momentengradient (*d*M_{M}/*d*t)ₘₐₓ durch einen einzigen Wert wiedergegeben werden.

In dem an den Betriebsbereich B angrenzenden, oberhalb der Saugmomentkennlinie M_{S} = const. und oberhalb der Ladegrenzdrehzahl n_{L_min} liegenden dritten Betriebsbereich C (M_{S} ≤ M_{M} < M_{VL}(n_{M}), n_{L_min} ≤ n_{M} ≤ nₗᵢₘ) ist eine weitere Erhöhung des Motormomentes M_{M} bis zu dem jeweiligen Wert der stationären Volllast-Drehmomentkennlinie M_{VL}(n_{M}) möglich, jedoch mit einem deutlich geringeren maximalen Momentengradienten (*d*M_{M}/*d*t)ₘₐₓ als in den Betriebsbereichen A und B, d.h. unterhalb der Saugmomentkennlinie M_{S} = const.

In dem an den Betriebsbereich A angrenzenden, oberhalb der Saugmomentkennlinie M_{S} = const. und unterhalb der Ladegrenzdrehzahl n_{L_min} liegenden vierten Betriebsbereich D (M_{S} ≤ M_{M} < M_{VL}(n_{M}), n_{idle} ≤ n_{M} < n_{L_min}) ist ohne eine Erhöhung der Motordrehzahl n_{M} über die Ladegrenzdrehzahl n_{L_min} eine weitere Erhöhung des Motormomentes M_{M} kurzfristig nicht möglich. Demzufolge ist im Betriebsbereich D das spontan abrufbare Maximalmoment Mₘₐₓ(n_{M}) des Verbrennungsmotors gleich dem entsprechenden Wert des Saugmomentes M_{S} (Mₘₐₓ(n_{M}) = Ms = const.) und der maximale Momentengradient (*d*M_{M}/*d*t)ₘₐₓ gleich Null ((*d*M_{M}/*d*t)ₘₐₓ = 0).

Oberhalb der Volllast-Drehmomentkennlinie M_{VL}(n_{M}) kann ein Betriebsbereich E definiert werden, der im normalen Fahrbetrieb nicht erreichbar und somit an sich irrelevant ist. Unterhalb der Volllast-Drehmomentkennlinie M_{VL}(n_{M}) und der Leerlaufdrehzahl n_{idle} liegt ein an sich unerwünschter, aber technisch erreichbarer Betriebsbereich F, in den der Verbrennungsmotor von einer nahe der Leerlaufdrehzahl n_{idle} liegenden Motordrehzahl n_{M} aus, beispielsweise durch ein schnelles Schließen der Reibungskupplung, dynamisch hineingedrückt werden kann, und in dem die Gefahr eines Absterbens des Verbrennungsmotors besteht.

Außerdem kann ein unmittelbar unterhalb der Volllast - Drehmomentkennlinie M_{VL}(n_{M}) liegender Nahbereich als zusätzlicher Betriebsbereich V definiert werden, in dem der Verbrennungsmotor unter Volllast, d.h. entlang der Volllast-Drehmomentkennlinie M_{VL}(n_{M}), auf eine niedrigere Motordrehzahl n_{M} gedrückt oder auf eine höhere Motordrehzahl n_{M} gesteuert werden kann.

Für die hier betrachteten Zughochschaltungen, bei denen der Antriebsmotor von einer unterhalb der Ladegrenzdrehzahl n_{L_min} liegenden Motordrehzahl n_{M} auf eine über der Ladegrenzdrehzahl n_{L_min} liegende Motordrehzahl n_{M} und von einem unter dem Saugmoment M_{S} liegenden Motormoment M_{M} auf ein über dem Saugmoment M_{S} liegendes Motormoment M_{M} geführt werden soll, ist demnach festzuhalten, dass der Antriebsmotor spontan, d.h. mit hohem Momentengradienten *d*M_{M}/*d*t, nur bis an das Saugmoment M_{S} belastet werden kann, wenn die Motordrehzahl n_{M} unter der Ladegrenzdrehzahl n_{L_min} bleibt.

Dieser Zusammenhang ist stark vereinfacht in dem Momentenverlauf M_{M}(t) in Teilbild (a) von Fig. 4 und in dem Zeitverlauf von Fig. 5a dargestellt. Ebenso ist für die vorliegende Fahrsteuerung festzuhalten, dass der Antriebsmotor zur spontanen Einstellung eines über dem Saugmoment M_{S} liegenden Motormomentes M_{M} über die Ladegrenzdrehzahl n_{L_min} beschleunigt, d.h. von dem Betriebsbereich A in den Betriebsbereich B gesteuert werden muss, da erst oberhalb der Ladegrenzdrehzahl n_{L_min}, wenn auch mit niedrigerem Momentengradienten *d*M_{M}/*d*t, eine weitere schnelle Erhöhung des Motormomentes M_{M} möglich ist. Dieser Zusammenhang ist stark vereinfacht in dem Momentenverlauf M_{M}(t) in Teilbild (b) von Fig. 4 und in dem Zeitverlauf von Fig. 5b veranschaulicht.

In dem vorliegenden Verfahren zur Schaltsteuerung ist erfindungsgemäß vorgesehen, dass eine mögliche Durchzugsschwäche des Antriebsmotors beim Lastaufbau am Ende einer Zughochschaltung in Abhängigkeit seiner dynamischen Betriebseigenschaften dadurch vermieden wird, dass der Antriebsmotor frühestens nach dem Auslegen des Lastgangs und spätestens zu Beginn des Lastaufbaus nach dem Einlegen des Zielgangs bis an die Ladegrenzdrehzahl n_{L_min} oder eine geringfügig über der Ladegrenzdrehzahl n_{L_min} liegende Motordrehzahl n_{M} beschleunigt (n_{M} = n_{L_min}; n_{M} = n_{L_min} + Δn_{M}) und während des Lastaufbaus bei weitgehend konstanter Motordrehzahl (n_{M} ≈ n_{L_min}) über das Saugmoment M_{S} des Antriebsmotors hinaus bis nahe an das Volllastmoment M_{VL}(n_{L_min}) belastet wird, bevor der Schlupfbetrieb der Reibungskupplung beendet wird.

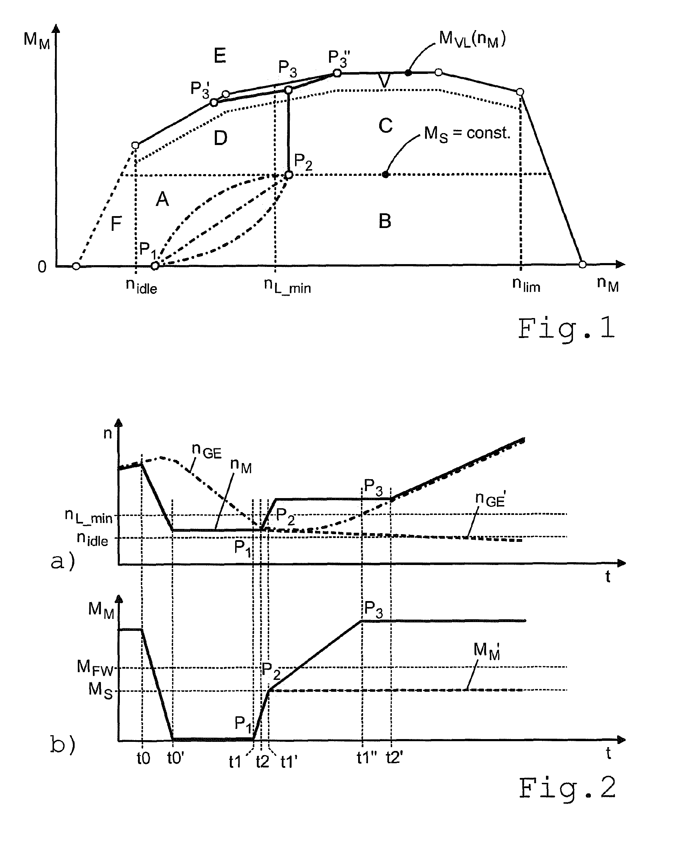

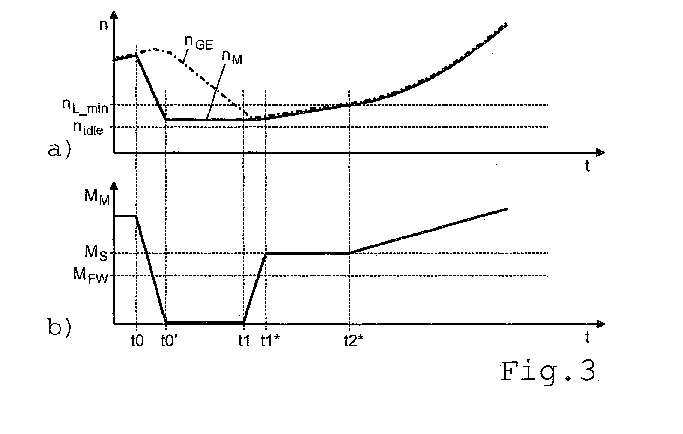

Drei Varianten einer entsprechenden Drehzahl- und Drehmomentführung des Verbrennungsmotors sind in Fig. 1 in einem Motordynamik-Kennfeld gemäß Fig. 4 dargestellt. Für eine erste Variante der erfindungsgemäßen Schaltsteuerung sind die jeweiligen Zeitverläufe der Motordrehzahl n_{M}, der Getriebeeingangsdrehzahl n_{GE} und des Motormomentes M_{M} in Fig. 2 abgebildet. In Fig. 3 sind dagegen entsprechende Drehzahl- und Drehmomentverläufe für eine Zughochschaltung abgebildet, bei der das erfindungsgemäße Steuerungsverfahren nicht zur Anwendung kommt.

Wie an den Zeitverläufen von Fig. 2 erkennbar ist, beginnt eine ausgelöste Zughochschaltung zum Zeitpunkt t0 damit, dass zeitlich überschnitten die Reibungskupplung geöffnet und das von dem Antriebsmotor abgegebene Motormoment M_{M} reduziert wird. Hierdurch sinkt die Motordrehzahl n_{M} bis zum Zeitpunkt t0' vorliegend beispielhaft bis nahe an die Leerlaufdrehzahl n_{idle} und das Motormoment M_{M} auf das Leerlaufmoment (M_{idle} ≈ 0). Danach wird der Lastgang weitgehend lastfrei ausgelegt und nachfolgend der höhere Zielgang synchronisiert und eingelegt. Anschließend erfolgt ab dem Zeitpunkt t1 (Betriebspunkt P1) der auch in Fig. 1 dargestellte Lastaufbau des Antriebsmotors durch eine Erhöhung der Motorleistung und ein koordiniertes Schließen der Reibungskupplung.

Da die aktuelle Getriebeeingangsdrehzahl n_{GE} unter der Ladegrenzdrehzahl n_{L_min} und das aktuelle Fahrwiderstandsmoment M_{FW} über dem Saugmoment M_{S} des Antriebsmotors liegt, wird das erfindungsgemäße Verfahren zur Schaltsteuerung gestartet. Demzufolge wird der Antriebsmotor ab dem Zeitpunkt t2 bis an eine geringfügig über der Ladegrenzdrehzahl n_{L_min} liegende Motordrehzahl n_{M} beschleunigt (n_{M} = n_{L_min} + Δn_{M}), so dass dieser ein Motormoment M_{M} aufbauen kann, das über dem zum Zeitpunkt t1' (Betriebspunkt P2) erreichten Saugmoment M_{S} liegt.

Der weitere Lastaufbau erfolgt bei weitgehend konstanter Motordrehzahl (n_{M} ≈ n_{L_min}) über das Saugmoment M_{S} des Antriebsmotors hinaus bis nahe an das Volllastmoment M_{VL}(n_{L_min}), das zum Zeitpunkt t1" (Betriebspunkt P3) erreicht wird. Mit dem zuvor erfolgenden Überschreiten des Fahrwiderstandsmomentes M_{FW} werden das Kraftfahrzeug und damit die Eingangswelle des Stufenschaltgetriebes beschleunigt (siehe Getriebeeingangsdrehzahl n_{GE}).

Würde das erfindungsgemäße Verfahren in diesem Fall nicht angewendet, sondern die Reibungskupplung nach dem Einlegen des Zielgangs vollständig geschlossen, dann könnte der Antriebsmotor spontan nur sein Saugmoment M_{S} erreichen und würde dieses zunächst beibehalten (siehe Drehmomentverlauf M_{M}' in Fig. 2b). Die Folge wäre eine Verzögerung des Kraftfahrzeugs (siehe Drehzahlverlauf n_{GE}' in Fig. 2a), die zu einer Rückschaltung oder einer Anfahrt aus dem Stillstand führen könnte.

Durch die in Fig. 1 eingezeichneten drei Kurvenverläufe zwischen den Betriebspunkten P₁ und P₂ soll veranschaulicht werden, dass die Drehzahl- und Drehmomentführung in diesem Bereich an sich beliebig erfolgen kann. Zur Beschleunigung des Schaltungsablaufs ist jedoch der Führungsverlauf mit dem schnellstmöglichen Erreichen des Betriebspunktes P₂ zu bevorzugen.

In der in Fig. 1 und Fig. 2 dargestellten ersten Verfahrensvariante ist vorgesehen, dass der Antriebsmotor auf der aktuellen Motordrehzahl (n_{M} = n_{L_min} + Δn_{M}) und dem aktuellen Motormoment (M_{M} ≈ M_{VL}(n_{L_min})) sowie die Reibungskupplung auf dem aktuellen Öffnungsgrad gehalten werden, bis sich durch die Beschleunigung des Kraftfahrzeugs an der Reibungskupplung Synchronlauf eingestellt hat (n_{M} = n_{GE}), bevor die Reibungskupplung vollständig geschlossen wird (Zeitpunkt t2').

In einer nur in Fig. 1 dargestellten, relativ unkomfortablen, jedoch die Reibungskupplung weniger stark belastenden zweiten Verfahrensvariante wird die Motordrehzahl n_{M} durch ein weiteres Schließen der Reibungskupplung und/oder durch einen Eingriff in die Motorsteuerung auf die Getriebeeingangsdrehzahl n_{GE} abgesenkt (n_{M} = n_{GE}, n_{M} < n_{L_min}), bevor die Reibungskupplung vollständig geschlossen wird (Betriebspunkt P₃'). Hierdurch wird das Motormoment M_{M} geringfügig reduziert (M_{M} < M_{VL}(n_{L_min})) und die Motordrehzahl n_{M} unter die Ladegrenzdrehzahl n_{L_min} abgesenkt (n_{M} < n_{L_min}). Es besteht jedoch keine Gefahr eines Rückfalls des Motormomentes M_{M} auf das Saugmoment M_{S}.

In einer ebenfalls nur in Fig. 1 dargestellten, relativ komfortablen, jedoch die Reibungskupplung höher belastenden dritten Verfahrensvariante wird der Antriebsmotor durch eine Erhöhung der Motorleistung und ein weiteres Schließen der Reibungskupplung auf eine höhere Motordrehzahl (n_{M} > n_{L_min}) und ein höheres Motormoment (M_{M} > M_{VL}(n_{L_min})) eingestellt (Betriebspunkt P₃") und dort gehalten, bis sich durch die Beschleunigung des Kraftfahrzeugs an der Reibungskupplung Synchronlauf (n_{M} = n_{GE}) eingestellt hat, bevor die Reibungskupplung vollständig geschlossen wird.

Da das erfindungsgemäße Verfahren in allen Verfahrensvarianten eine gegenüber einem normalen Schaltungsablauf erhöhte Belastung der Reibungskupplung zur Folge hat, sollte es als Sonderfunktion nur bei dringendem Bedarf, z.B. bei extrem hoher Leistungsanforderung des Fahrers, bei speziellen Einsatzfahrzeugen, wie z.B. Feuerwehr- oder Rettungsfahrzeugen, oder bei Noteinsätzen von Kraftfahrzeugen, zur Anwendung kommen.

Wenn bei einer Zughochschaltung das aktuelle Fahrwiderstandsmoment M_{FW} jedoch unter dem Saugmoment M_{S} des Antriebsmotors liegt, d.h. eine zumindest minimale Fahrbeschleunigung ohnehin möglich ist, sollte das vorliegende Verfahren nicht angewendet werden, auch wenn der Fahrer über die Fahrpedalstellung ein höheres Motormoment M_{M} bzw. eine höhere Fahrbeschleunigung anfordert.

Die Drehzahl- und Drehmomentverläufe einer entsprechenden Zughochschaltung sind beispielhaft in Fig. 3 abgebildet. In diesem Fall erfolgt der Lastaufbau des Antriebsmotors ab dem Zeitpunkt t1 zunächst nur bis zum Erreichen des Saugmomentes M_{S} (Zeitpunkt t1*). Da mit dem vorhergehenden Überschreiten des Fahrwiderstandsmomentes M_{FW} jedoch das Kraftfahrzeug schon beschleunigt, wird die Ladegrenzdrehzahl n_{L_min} relativ schnell erreicht (Zeitpunkt t2*). Die weitere Fahrt des Kraftfahrzeugs erfolgt dann mit zunehmender Beschleunigung, da das Motormoment M_{M} aufgrund des ansteigenden Ladedruckes p_{L} über das Saugmoment M_{S} hinaus ansteigt. In diesem Fall ist die Anwendung des erfindungsgemäßen Verfahrens somit nicht zwingend erforderlich und sollte zur Schonung der Reibungskupplung daher unterbleiben.

### Bezugszeichen

- A: Betriebsbereich
- B: Betriebsbereich
- C: Betriebsbereich
- D: Betriebsbereich
- E: Betriebsbereich
- F: Betriebsbereich
- M: Drehmoment
- M_{Acc}: Beschleunigungsmoment
- M_{FW}: Fahrwiderstandsmoment
- M_{M}: Motormoment
- M_{M}': Motormoment
- M_{idle}: Leerlaufmoment
- Mₘₐₓ: Maximalmoment
- M_{S}: Saugmoment
- Mₛₒₗₗ: Sollmoment
- M_{VL}: Volllastmoment
- n: Drehzahl
- n_{GE}: Getriebeeingangsdrehzahl
- n_{GE}': Getriebeeingangsdrehzahl
- n_{idle}: Leerlaufdrehzahl
- n_{L_min}: Ladegrenzdrehzahl
- nₗᵢₘ: Abregeldrehzahl
- n_{M}: Motordrehzahl
- n_{Ziel}: Anschlussdrehzahl
- p: Druck
- p_{L}: Ladedruck
- p_{L_min}: Ladedruckgrenzwert
- P₁: Betriebspunkt
- P₂: Betriebspunkt
- P₃: Betriebspunkt
- P₃': Betriebspunkt
- P₃": Betriebspunkt
- t: Zeit
- t0: Zeitpunkt
- t0': Zeitpunkt
- t1: Zeitpunkt
- t1': Zeitpunkt
- t1": Zeitpunkt
- t1*: Zeitpunkt
- t2: Zeitpunkt
- t2': Zeitpunkt
- t2*: Zeitpunkt
- V: Betriebsbereich
- Δn_{M}: Drehzahlerhöhung

## Patentansprüche

1. Verfahren zur Schaltsteuerung eines Kraftfahrzeugs, dessen Antriebsstrang einen als turboaufgeladener Verbrennungsmotor ausgebildeten Antriebsmotor, eine als automatisierte Reibungskupplung ausgebildete Anfahr- und Schaltkupplung und ein als automatisiertes Stufenschaltgetriebe ausgebildetes Fahrgetriebe umfasst, wobei eine beim Lastaufbau am Ende einer Zughochschaltung auftretende Durchzugsschwäche des Antriebsmotors vermieden wird, **dadurch gekennzeichnet, dass** der Antriebsmotor frühestens nach dem Auslegen des Lastgangs und spätestens zu Beginn des Lastaufbaus nach dem Einlegen des Zielgangs bis an die Ladegrenzdrehzahl (n_{L_min}) oder eine geringfügig über der Ladegrenzdrehzahl (n_{L_min}) liegende Motordrehzahl (n_{M}) beschleunigt (n_{M} = n_{L_min}; n_{M} = n_{L_min} + Δn_{M}) und während des Lastaufbaus bei weitgehend konstanter Motordrehzahl (n_{M} ≈ n_{L_min}) über das Saugmoment (M_{S}) des Antriebsmotors hinaus bis nahe an das Volllastmoment (M_{VL}(n_{L_min})) belastet wird, bevor der Schlupfbetrieb der Reibungskupplung beendet wird.

2. Verfahren nach Anspruch 1, **dadurch gekennzeichnet, dass** der Antriebsmotor auf der aktuellen Motordrehzahl (n_{M} = n_{L_min}; n_{M} = n_{L_min} + Δn_{M}) und dem aktuellen Motormoment (M_{M} ≈ M_{VL}(n_{L_min})) sowie die Reibungskupplung auf dem aktuellen Öffnungsgrad gehalten werden, bis sich an der Reibungskupplung Synchronlauf eingestellt hat (n_{M} = n_{GE}), und dass die Reibungskupplung dann vollständig geschlossen wird.

3. Verfahren nach Anspruch 2, **dadurch gekennzeichnet, dass** der Antriebsmotor bis zum vollständigen Schließen der Reibungskupplung dann auf der aktuellen Motordrehzahl (n_{M} = n_{L_min}; n_{M} = n_{L_min} + Δn_{M}) und dem aktuellen Motormoment (M_{M} ≈ M_{VL}(n_{L_min})) gehalten wird, wenn das aktuelle Motormoment (M_{VL}(n_{L_min})) weitgehend dem aktuellen Sollmoment (Mₛₒₗₗ) des Antriebsmotors entspricht (M_{VL}(n_{L_min}) ≈ Mₛₒₗₗ).

4. Verfahren nach Anspruch 1, **dadurch gekennzeichnet, dass** die Motordrehzahl (n_{M}) durch ein weiteres Schließen der Reibungskupplung und/oder durch einen Eingriff in die Motorsteuerung auf die Getriebeeingangsdrehzahl (n_{GE}) abgesenkt (n_{M} = n_{GE}, n_{M} < n_{L_min}) wird, und dass die Reibungskupplung dann vollständig geschlossen wird.

5. Verfahren nach Anspruch 4, **dadurch gekennzeichnet, dass** die Motordrehzahl (n_{M}) erst dann unter die Ladegrenzdrehzahl (n_{L_min}) abgesenkt wird, wenn der Ladedruck (p_{L}) des Antriebsmotors einen für einen Ladedruckaufbau durch den Abgasturbolader kennzeichnenden Ladedruckgrenzwert (p_{L_min}) überschritten hat (p_{L} > p_{L_min}), und wenn das erhöhte Motormoment (M_{M} = M_{VL}(N_{L_min}) stabil zur Verfügung steht.

6. Verfahren nach Anspruch 4 oder 5, **dadurch gekennzeichnet, dass** die Motordrehzahl (n_{M}) nur dann unter die Ladegrenzdrehzahl (n_{L_min}) abgesenkt wird, wenn das aktuelle Motormoment (M_{VL}(n_{L_min})) deutlich über dem Sollmoment (Mₛₒₗₗ) des Antriebsmotors liegt (M_{VL}(n_{L_min}) >> Mₛₒₗₗ), und wenn das Motormoment (M_{VL}(n_{M})) bei der abgesenkten Motordrehzahl (n_{M} < n_{L_min}) zumindest das Fahrwiderstandsmoment (M_{FW}) nicht unterschreitet (M_{VL}(n_{M}) ≥ M_{FW}).

7. Verfahren nach Anspruch 1, **dadurch gekennzeichnet, dass** der Antriebsmotor durch eine Erhöhung der Motorleistung und ein weiteres Schließen der Reibungskupplung auf eine höhere Motordrehzahl (n_{M} > n_{L_min}) und ein höheres Motormoment (M_{M} > M_{VL}(n_{L_min})) eingestellt und dort gehalten wird, bis sich an der Reibungskupplung Synchronlauf eingestellt hat (n_{M} = n_{GE}), und dass die Reibungskupplung dann vollständig geschlossen wird.

8. Verfahren nach Anspruch 7, **dadurch gekennzeichnet, dass** die Motordrehzahl (n_{M}) nur dann über die Ladegrenzdrehzahl (n_{L_min}) hinaus erhöht wird, wenn das aktuelle Motormoment (M_{VL}(n_{L_min})) deutlich unter dem Sollmoment (Mₛₒₗₗ) des Antriebsmotors liegt (M_{VL}(n_{L_min}) << Mₛₒₗₗ), und wenn das Motormoment (M_{VL}(n_{M})) bei der erhöhten Motordrehzahl (n_{M} < n_{L_min}) zumindest das Fahrwiderstandsmoment (M_{FW}) nicht unterschreitet (M_{VL}(n_{M}) ≥ M_{FW}).

9. Verfahren nach einem der Ansprüche 1 bis 8, **dadurch gekennzeichnet, dass** eine vorliegende oder unmittelbar bevorstehende Durchzugsschwäche des Antriebsmotors dadurch erkannt wird, dass die Motordrehzahl (n_{M}) während der schaltungsbedingten Zugkraftunterbrechung unter die Ladegrenzdrehzahl (n_{L_min}) des Antriebsmotors gesunken ist (n_{M} < n_{L_min}), und dass das Fahrwiderstandsmoment (M_{FW}) nach Abschluss der Hochschaltung über dem Saugmoment (M_{S}) des Antriebsmotors liegt (M_{FW} > M_{S}).

10. Verfahren nach einem der Ansprüche 1 bis 9, **dadurch gekennzeichnet, dass** eine vorliegende oder unmittelbar bevorstehende Durchzugsschwäche des Antriebsmotors dadurch erkannt wird, dass die Anschlussdrehzahl (n_{Ziel}) der aktuellen Hochschaltung unter der Ladegrenzdrehzahl (n_{L_min}) des Antriebsmotors liegt (n_{Ziel} < n_{L_min}), und dass das Fahrwiderstandsmoment (M_{FW}) nach Abschluss der Hochschaltung über dem Saugmoment (M_{S}) des Antriebsmotors liegt (M_{FW} > M_{S}).

11. Verfahren nach einem der Ansprüche 1 bis 10, **dadurch gekennzeichnet, dass** eine vorliegende oder unmittelbar bevorstehende Durchzugsschwäche des Antriebsmotors dadurch erkannt wird, dass der Ladedruck (p_{L}) des Antriebsmotors während der schaltungsbedingten Zugkraftunterbrechung unter den Ladedruckgrenzwert (p_{L_min}) gesunken ist (p_{L} < p_{L_min}), und dass das Fahrwiderstandsmoment (M_{FW}) nach Abschluss der Hochschaltung über dem Saugmoment (M_{S}) des Antriebsmotors liegt (M_{FW} > M_{S}).

12. Verfahren nach einem der Ansprüche 1 bis 11, **dadurch gekennzeichnet, dass** permanent das aktuelle Sollmoment (Mₛₒₗₗ) des Antriebsmotors ermittelt wird, und dass vorzeitig zur normalen Schalt- oder Fahrsteuerung übergegangen wird, wenn das aktuelle Sollmoment (Mₛₒₗₗ) das Saugmoment (M_{S}) des Antriebsmotors erreicht oder unterschritten hat (Mₛₒₗₗ ≤ M_{S}).

13. Verfahren nach einem der Ansprüche 1 bis 12, **dadurch gekennzeichnet, dass** permanent die thermische und/oder mechanische Belastung der Reibungskupplung ermittelt wird, und dass vorzeitig zur normalen Schalt- oder Fahrsteuerung übergegangen wird, wenn die aktuelle Belastung der Reibungskupplung einen vorgegebenen Belastungsgrenzwert erreicht oder überschritten hat.

14. Verfahren nach einem der Ansprüche 1 bis 13, **dadurch gekennzeichnet, dass** die durch die erfindungsgemäße Schaltsteuerung bewirkte thermische und/oder mechanische Belastung der Reibungskupplung vorab ermittelt wird, und dass die Schaltsteuerung nach wenigstens einem der Ansprüche 1 bis 8 nur dann durchgeführt wird, wenn die Belastung der Reibungskupplung einen vorgegebenen Belastungsgrenzwert voraussichtlich nicht erreicht oder überschreitet.

15. Verfahren nach einem der Ansprüche 1 bis 14, **dadurch gekennzeichnet, dass** das durch die erfindungsgemäße Schaltsteuerung erreichbare Maximalmoment (Mₘₐₓ) des Antriebsmotors vorab ermittelt wird, und dass die Schaltsteuerung nach wenigstens einem der Ansprüche 1 bis 8 nur dann durchgeführt wird, wenn das erreichbare Maximalmoment zumindest das aktuelle Fahrwiderstandsmoment (M_{FW}) nicht unterschreitet (Mₘₐₓ ≥ M_{FW}).

16. Verfahren nach einem der Ansprüche 1 bis 15, **dadurch gekennzeichnet, dass** die Fahrsteuerung nach wenigstens einem der Ansprüche 1 bis 8 nur dann durchgeführt wird, wenn die Fahrpedalstellung eine vorab festgelegte Grenzstellung erreicht oder überschritten hat.

17. Verfahren nach einem der Ansprüche 1 bis 16, **dadurch gekennzeichnet, dass** die Fahrsteuerung nach wenigstens einem der Ansprüche 1 bis 8 nur dann durchgeführt wird, wenn diese als fahrzeug- oder einsatzspezifische Sonderfunktion freigegeben ist.

## Claims

1. Gearshift control method for a motor vehicle, the drive train of which comprises a drive engine which is embodied as a turbo-charged internal combustion engine, a starter and shift clutch which is embodied as an automated friction clutch, and a transmission which is embodied as an automated step-by-step variable speed transmission, wherein a traction weakness of the drive engine which occurs during the load build-up at the end of a traction upshift is avoided, **characterized in that** the drive engine accelerates at the earliest after the disengagement of the load gear speed and at the earliest at the start of the load build-up after the engagement of the target gear speed up to the charge limit rotational speed (n_{L_min}) or an engine rotational speed (n_{M}) which is slightly above the charge limit rotational speed (n_{L_min}) (n_{M}=n_{L_min}; n_{M}=n_{L_min}+Δn_{M}), and during the load build-up with largely constant engine rotational speed (nₘ≈n_{L_min}) is loaded beyond the suction torque (M_{S}) of the drive engine to close to the full load torque (M_{VL}(n_{L_min})) before the slip operation of the friction clutch is ended.

2. Method according to Claim 1, **characterized in that** the drive engine is held at the current engine rotational speed (n_{M}=n_{L_min}; n_{M}=n_{L_min}+Δn_{M}) and the current engine torque (M_{M}≈M_{VL}(n_{L_min})) and the friction clutch is held at the current degree of opening until synchronous running has occurred at the friction clutch (n_{M}=n_{GE}), and **in that** the friction clutch is then completely closed.

3. Method according to Claim 2, **characterized in that** the drive engine is then held, up to the complete closing of the friction clutch, at the current engine rotational speed (n_{M}=n_{L_min}; n_{M}=n_{L_min}+Δn_{M}) and the current engine torque (M_{M}≈M_{VL} (n_{L_min})) if the current engine torque (M_{VL}(n_{L_min})) corresponds largely to the current setpoint torque (Mₛₑₜₚ) of the drive engine (M_{VL}(n_{L_min})≈Mₛₑₜₚ).

4. Method according to Claim 1, **characterized in that** the engine rotational speed (n_{M}) is reduced to the transmission input rotational speed (n_{GE}) by further closing of the friction clutch and/or by intervention into the engine controller (n_{M}=n_{GE}, n_{M}<n_{L_min}), and **in that** the friction clutch is then completely closed.

5. Method according to Claim 4, **characterized in that** the engine rotational speed (n_{M}) is not reduced below the charge limit rotational speed (n_{L_min}) until the charging pressure (p_{L}) of the drive engine has exceeded a charging pressure limiting value (p_{L_min}) which characterizes a charging pressure build-up by the exhaust gas turbocharger (p_{L}>p_{L_min}) and if the increased engine torque (M_{M}=M_{VL}(n_{L_min})) is available in a stable fashion.

6. Method according to Claim 4 or 5, **characterized in that** the engine rotational speed (n_{M}) is reduced below the charge limit rotational speed (n_{L_min}) only when the current engine torque (M_{VL}(n_{L_min})) is significantly above the setpoint torque (Mₛₑₜₚ) of the drive engine (M_{VL}(n_{L_min})>>Mₛₑₜₚ) and when the engine torque (M_{VL}(nₘ)) at the reduced engine rotational speed (n_{M}<n_{L_min}) does not undershoot at least the driving resistance torque (M_{FW}) (M_{VL}(n_{M}) ≥M_{FW}).

7. Method according to Claim 1, **characterized in that** the drive engine is set to a relatively high engine rotational speed (n_{M}>n_{L_min}) and a relatively high engine torque (M_{M}>M_{VL} (n_{L_min})) by increasing the engine power and further closing of the friction clutch, and is held there until synchronous running has become established at the friction clutch (n_{M}=n_{GE}), and **in that** the friction clutch is then completely closed.

8. Method according to Claim 7, **characterized in that** the engine rotational speed (n_{M}) is increased beyond the charge limit rotational speed (n_{L_min}) only when the current engine torque (M_{VL}(n_{L_min})) is significantly below the setpoint torque (Mₛₑₜₚ) of the drive engine (M_{VL}(n_{L_min})<<Mₛₑₜₚ) and when the engine torque (M_{VL}(n_{M})) at the increased engine rotational speed (n_{M}<n_{L_min}) at least does not undershoot the driving resistance torque (M_{FW})(M_{VL}(n_{M})≥M_{FW}).

9. Method according to one of Claims 1 to 8, **characterized in that** a present or immediately imminent traction weakness of the drive engine is detected **in that** the engine rotational speed (n_{M}) has dropped below the charge limit rotational speed (n_{L_min}) of the drive engine during the gearshift-induced interruption in the traction force (nₘ<n_{L_min}), and **in that** after the termination of the upshift the driving resistance torque (M_{FW}) is above the suction torque (M_{S}) of the drive engine (M_{FW}>M_{S}).

10. Method according to one of Claims 1 to 9, **characterized in that** a present or immediately imminent traction weakness of the drive engine is detected **in that** the connection rotational speed (n_{target}) of the current upshift is below the charge limit rotational speed (n_{L_min}) of the drive engine (n_{target}<n_{L_min}), and **in that** the driving resistance torque (M_{FW}) is above the suction torque (M_{S}) of the drive engine after the termination of the upshift (M_{FW}>M_{S}).

11. Method according to one of Claims 1 to 10, **characterized in that** a present or immediately imminent traction weakness of the drive engine is detected **in that** the charging pressure (p_{L}) of the drive engine has dropped below the charging pressure limiting value (p_{L_min}) during the gearshift-induced interruption in the traction force (p_{L}<p_{L_min}), and **in that** the driving resistance torque (M_{FW}) is above the suction torque (M_{S}) of the drive engine after the termination of the upshift (M_{FW}>M_{S}).

12. Method according to one of Claims 1 to 11, **characterized in that** the current setpoint torque (Mₛₑₜₚ) of the drive engine is determined continuously, and **in that** the normal gearshift control or driving control is changed over to early, when the current setpoint torque (Mₛₑₜₚ) has reached or undershot the suction torque (M_{S}) of the drive engine (Mₛₑₜₚ<M_{S}).

13. Method according to one of Claims 1 to 12, **characterized in that** the thermal and/or mechanical loading of the friction clutch is determined continuously, and **in that** the normal gearshift control or driving control is changed over to early, when the current loading of the friction clutch has reached or exceeded a predefined loading limiting value.

14. Method according to one of Claims 1 to 13, **characterized in that** the thermal and/or mechanical loading of the friction clutch which is brought about by the gearshift control according to the invention is determined in advance, and **in that** the gearshift control is carried out according to at least one of Claims 1 to 8 only when the loading of the friction clutch is not expected to reach or exceed a predefined loading limiting value.

15. Method according to one of Claims 1 to 14, **characterized in that** the maximum torque (Mₘₐₓ) of the drive engine which can be achieved by the gearshift control according to the invention is determined in advance, and **in that** the gearshift control according to at least one of Claims 1 to 8 is carried out only when the maximum torque which can be achieved at least does not undershoot the current driving resistance torque (M_{FW}) (Mₘₐₓ≥M_{FW}).

16. Method according to one of Claims 1 to 15, **characterized in that** the driving control according to at least one of Claims 1 to 8 is carried out only when the accelerator pedal position has reached or exceeded a limiting position which is defined in advance.

17. Method according to one of Claims 1 to 16, **characterized in that** the driving control according to at least one of Claims 1 to 8 is carried out only when the latter is enabled as a vehicle-specific or use-specific special function.

## Revendications

1. Procédé pour la commande de changement de vitesse d'un véhicule automobile dont la chaîne cinématique comprend un moteur d'entraînement réalisé sous la forme d'un moteur à combustion interne à turbocompresseur, un embrayage de démarrage et de changement de vitesses réalisé sous la forme d'un embrayage à friction automatisé et une transmission réalisée sous la forme d'une transmission à changement de vitesses étagée automatisée, une faiblesse de traction du moteur d'entraînement se produisant lors d'une augmentation de charge à la fin d'un passage à une vitesse supérieure en traction étant évitée, **caractérisé en ce que** le moteur d'entraînement est accéléré au plus tôt après la sortie du rapport en charge et au plus tard au début de l'augmentation de la charge après l'enclenchement du rapport cible jusqu'au régime limite de charge (n_{L_min}) ou un régime moteur (n_{M}) situé légèrement au-dessus du régime limite de charge (n_{L_min}) (n_{M} = n_{L_min}; n_{M} = n_{L_min} + Δn_{M}) et est sollicité avec un régime moteur essentiellement constant (n_{M} ≈ n_{L_min}) pendant l'augmentation de la charge au-delà du couple d'admission (M_{S}) du moteur d'entraînement jusqu'à proximité du couple de pleine charge (M_{VL}(n_{L_min})), avant que le mode de glissement de l'embrayage à friction s'achève.

2. Procédé selon la revendication 1, **caractérisé en ce que** le moteur d'entraînement est maintenu au régime moteur actuel (n_{M} = n_{L_min}; n_{M} = n_{L_min} + Δn_{M}) et au couple moteur actuel (M_{M} ≈ M_{VL} (n_{L_min})) et l'embrayage à friction est maintenu au degré d'ouverture actuel jusqu'à ce qu'un fonctionnement synchrone au niveau de l'embrayage à friction se soit établi (n_{M} = n_{GE}), et **en ce que** l'embrayage à friction est alors complètement fermé.

3. Procédé selon la revendication 2, **caractérisé en ce que** le moteur d'entraînement est maintenu jusqu'à la fermeture complète de l'embrayage à friction au régime moteur actuel (n_{M} = n_{L_min}; n_{M} = n_{L_min} + Δn_{M}) et au couple moteur actuel (M_{M} ≈ M_{VL}(n_{L_min})) lorsque le couple moteur actuel (M_{VL}(n_{L_min})) correspond essentiellement au couple de consigne actuel (Mₛₒₗₗ) du moteur d'entraînement (M_{VL}(n_{L_min}) ≈ Mₛₒₗₗ).

4. Procédé selon la revendication 1, **caractérisé en ce que** le régime moteur (n_{M}) est abaissé par une fermeture supplémentaire de l'embrayage à friction et/ou par une intervention dans la commande du moteur sur le régime d'entrée de la transmission (n_{GE}) (n_{M} = n_{GE}, n_{M} < n_{L-min}), et **en ce que** l'embrayage à friction est ensuite complètement fermé.

5. Procédé selon la revendication 4, **caractérisé en ce que** le régime moteur (n_{M}) est abaissé en dessous du régime limite de charge (n_{L_min}) seulement lorsque la pression de charge (p_{L}) du moteur d'entraînement a dépassé une valeur limite de pression de charge (p_{L_min}) caractérisante pour une augmentation de la pression de charge par le turbocompresseur à gaz d'échappement (p_{L} > P_{L_min}), et lorsque le couple moteur augmenté (M_{M} = M_{VL} (n_{L_min})) est disponible de manière stable.

6. Procédé selon la revendication 4 ou 5, **caractérisé en ce que** le régime moteur (n_{M}) est abaissé en dessous du régime limite de charge (n_{L_min}) seulement lorsque le couple moteur actuel (M_{VL}(n_{L_min})) se situe nettement au-dessus du couple de consigne (Mₛₒₗₗ) du moteur d'entraînement (M_{VL}(n_{L_min}) >> Mₛₒₗₗ), et lorsque le couple moteur (M_{VL}(n_{M})), lorsque le régime moteur est abaissé (n_{M} < n_{L_min}), ne descend pas au moins en dessous du couple de résistance à l'avancement (M_{FW}) (M_{VL}(n_{M}) ≥ M_{FW}).

7. Procédé selon la revendication 1, **caractérisé en ce que** le moteur d'entraînement est ajusté par une augmentation de la puissance du moteur et une fermeture supplémentaire de l'embrayage à friction à un régime moteur plus élevé (n_{M} > n_{L_min}) et à un couple moteur plus élevé (M_{M} > M_{VL} (n_{L_min})) et y est maintenu jusqu'à ce qu'un fonctionnement synchrone se soit établi au niveau de l'embrayage à friction (n_{M} = n_{GE}), et **en ce que** l'embrayage à friction est alors complètement fermé.

8. Procédé selon la revendication 7, **caractérisé en ce que** le régime moteur (n_{M}) est seulement augmenté au-delà du régime limite de charge (n_{L_min}) lorsque le couple moteur actuel (M_{VL}(n_{L_min})) se situe nettement en dessous du couple de consigne (Mₛₒₗₗ) du moteur d'entraînement (M_{VL}(n_{L_min}) << Mₛₒₗₗ), et lorsque le couple moteur (M_{VL}(n_{M})), lorsque le régime moteur est augmenté (n_{M} < n_{L_min}), ne descend pas au moins en dessous du couple de résistance à l'avancement (M_{FW}) (M_{VL}(n_{M}) ≥ M_{FW}).

9. Procédé selon l'une quelconque des revendications 1 à 8, **caractérisé en ce qu'**une faiblesse de traction du moteur d'entraînement se produisant ou imminente est reconnue par le fait que le régime moteur (n_{M}), pendant une interruption de la force de traction due au changement de vitesse, est descendu en dessous du régime limite de charge (n_{L_min}) du moteur d'entraînement (n_{M} < n_{L_min}), et que le couple de résistance à l'avancement (M_{FW}), à la fin du passage à la vitesse supérieure, est au-dessus du couple d'admission (M_{S}) du moteur d'entraînement (M_{FW} > M_{S}).

10. Procédé selon l'une quelconque des revendications 1 à 9, **caractérisé en ce qu'**une faiblesse de traction du moteur d'entraînement se produisant ou imminente est reconnue par le fait que le régime de connexion (n_{Ziel}) du passage actuel à la vitesse supérieure est situé en dessous du régime limite de charge (n_{L_min}) du moteur d'entraînement (n_{Ziel} < n_{L_min}), et que le couple de résistance à l'avancement (M_{FW}), à la fin du passage à la vitesse supérieure, est situé au-dessus du couple d'admission (M_{S}) du moteur d'entraînement (M_{FW} > M_{S}).

11. Procédé selon l'une quelconque des revendications 1 à 10, **caractérisé en ce qu'**une faiblesse de traction du moteur d'entraînement se produisant ou imminente est reconnue par le fait que la pression de charge (p_{L}) du moteur d'entraînement, pendant l'interruption de la force de traction due au changement de vitesse, est descendue en dessous de la valeur limite de pression de charge (p_{L_min}) (p_{L} < p_{L_min}), et que le couple de résistance à l'avancement (M_{FW}), à la fin du passage à la vitesse supérieure, est situé au-dessus du couple d'admission (M_{S}) du moteur d'entraînement (M_{FW} > Mₛ).

12. Procédé selon l'une quelconque des revendications 1 à 11, **caractérisé en ce que** l'on détermine en permanence le couple de consigne actuel (Mₛₒₗₗ) du moteur d'entraînement et **en ce que** l'on passe prématurément à une commande de changement de vitesse ou de conduite normale lorsque le couple de consigne actuel (Mₛₒₗₗ) a atteint ou est passé en dessous du couple d'admission (M_{S}) du moteur d'entraînement (Mₛₒₗₗ ≤ M_{S}).

13. Procédé selon l'une quelconque des revendications 1 à 12, **caractérisé en ce que** l'on détermine en permanence la sollicitation thermique et/ou mécanique de l'embrayage à friction, et **en ce que** l'on passe prématurément à une commande de changement de vitesse ou de conduite normale lorsque la sollicitation actuelle de l'embrayage à friction a atteint ou est passée au-dessus d'une valeur limite de sollicitation prédéfinie.

14. Procédé selon l'une quelconque des revendications 1 à 13, **caractérisé en ce que** la sollicitation thermique et/ou mécanique de l'embrayage à friction provoquée par la commande de changement de vitesse selon l'invention est déterminée au préalable, et **en ce que** la commande de changement de vitesse selon au moins l'une quelconque des revendications 1 à 8 n'est mise en oeuvre que si la sollicitation de l'embrayage à friction ne risque pas d'atteindre ou de dépasser une valeur limite de sollicitation prédéfinie.

15. Procédé selon l'une quelconque des revendications 1 à 14, **caractérisé en ce que** le couple maximum (Mₘₐₓ) du moteur d'entraînement pouvant être obtenu par la commande changement de vitesse selon l'invention est déterminé au préalable et **en ce que** la commande de changement de vitesse selon au moins l'une quelconque des revendications 1 à 8 n'est mise en oeuvre que si le couple maximum pouvant être obtenu ne dépasse pas au moins le couple de résistance à l'avancement actuel (M_{FW}) (Mₘₐₓ ≥ M_{FW}).

16. Procédé selon l'une quelconque des revendications 1 à 15, **caractérisé en ce que** la commande de conduite selon au moins l'une quelconque des revendications 1 à 8 n'est mise en oeuvre que lorsque la position de la pédale d'accélérateur a atteint ou dépassé une position limite fixée préalablement.

17. Procédé selon l'une quelconque des revendications 1 à 16, **caractérisé en ce que** la commande de conduite selon au moins l'une quelconque des revendications 1 à 8 n'est mise en oeuvre que lorsque celle-ci est déclenchée en tant que fonction spéciale spécifique au véhicule ou spécifique à l'utilisation.
